# EUROPÄISCHE PATENTSCHRIFT

(11) **EP 0 623 395 B1**
(45) Veröffentlichungstag und Bekanntmachung des Hinweises auf die Patenterteilung: **15.01.1997**
(21) Anmeldenummer: 94104661.7
(22) Anmeldetag: 24.03.1994
(51) Int. Cl.: B06B 1/02

(54) **Schaltungsanordnung zur Dämpfung eines Ultraschallwandlers**
Attenuation circuit for an ultrasound transducer
Circuit pour amortir un transducteur d'ultrasons

(30) Priorität: 30.04.1993 DE 4314247
(43) Veröffentlichungstag der Anmeldung: 09.11.1994
(73) Patentinhaber: ROBERT BOSCH GMBH, 70442 Stuttgart (DE)
(72) Erfinder: Hoetzel, Jürgen, Dipl.-Ing., D-64293 Darmstadt (DE); Thelen, Wolfgang, Prof. Dr., D-13465 Berlin (DE)

(56) Entgegenhaltungen:
- EP-A- 0 152 895
- DE-C- 862 274

## Beschreibung

### Stand der Technik

Die Erfindung geht aus von einer Schaltungsanordnung zur Dämpfung eines Ultraschallwandlers nach der Gattung des Hauptanspruchs. Eine derartige Schaltungsanordnung ist aus der DE-C-862 274 bekannt.

Es ist schon bekannt, insbesondere Ultraschallwandler, die zum Betrieb sowohl als Sender als auch als Empfänger ausgebildet sind, durch Verwendung geeigneter Dämpfungsmaterialien so auszubilden, daß die Schwingmembran des Ultraschallwandlers nach möglichst kurzer Zeit ausschwingt. Eine kurze Abklingdauer nach dem Abschalten der impulsartigen Ansteuerung ist erwünscht, um kurze Meßintervalle zu erhalten. Dabei entstehen jedoch Nebenspektren, die unerwünschte Geräusche erzeugen. Es hat sich auch gezeigt, daß die verwendeten Dämpfungsmaterialien nur für eine bestimmte vorgegebene Frequenz wirksam sind und bei geänderter Ansteuerfrequenz nicht mehr die gewünschte Wirkung zeigen. Des weiteren ist bei der Herstellung der Dämpfungsmaterialien und der Dämpfungskörper mit großen Fertigungstoleranzen zu rechnen, die die Abkling-Charakteristik des Ultraschallwandlers ungünstig beeinflussen.

### Vorteile der Erfindung

Die erfindungsgemäße Schaltungsanordnung mit den kennzeichnenden Merkmalen des Hauptanspruchs hat demgegenüber den Vorteil, daß die Abkling-Charakteristik und die Abklingdauer des Sendesignales durch die Ansteuerkurve derart vorgebbar ist, daß die Erzeugung der Nebenspektren und der Geräuschentwicklung wesentlich vermindert wird. Auftretende Fertigungstoleranzen werden dadurch vorteilhaft beeinflußt, so daß eine schnelle Meßfolge auch für kurze Abstände möglich ist.

Durch die in den abhängigen Ansprüchen aufgeführten Maßnahmen sind vorteilhafte Weiterbildungen und Verbesserung der im Hauptanspruch angegebenen Schaltungsanordnung möglich. Besonders vorteilhaft ist, daß der Generator für die Beeinflussung der Ansteuerspannung ein Mittel aufweist, das innerhalb einer vorgegebenen Zeitdauer die Spannung auf Null absenkt. Dieses wird in vorteilhafter Weise dadurch erreicht, daß die Amplitude der Sendeimpulse durch eine verringerte Anregung des Ultraschallwandlers vermindert wird.

Eine besonders einfache Beeinflussung erfolgt durch ein RC-Glied, das eine Tiefpaßcharakteristik aufweist.

Durch die vorgeschlagenen Schaltungsmaßnahmen werden ebenfalls die Amplituden der Frequenz-Nebenspektren beim Abschaltvorgang vorteilhaft verringert. Durch die geringere Anregung gegen Ende des Implses werden kürzere Schaltintervalle bzw. Betriebsintervalle des Ultraschallwandlers ermöglicht. Bei der Beeinflussung der Abstrahlkeule der Sendeimpulse geht man von der mathematischen Annahme aus, daß ein Dirac-Stoß eine ideale Halbkugelwelle bei einem Ultraschall-Sensor erzeugen würde. Nutzt man nur wenige Anregungsschwingungen, welche zusätzlich noch amplitudenmoduliert werden, wird die akustische Keule verbreitert (Dirac-Stoß-Effekt).

Weiterhin ist vorteilhaft, daß durch eine Amplitudenmodulierung der Ausgangsspannung die Nebenspektren vermindert werden und damit eine Verringerung der Abschaltgeräusche stattfindet. Dieses wird dadurch erreicht, daß die Abklingdauer zunächst auf einen Sprungwert abfällt, der für eine bestimmte Zeitdauer konstant ist. Erst nach Ablauf dieser Zeitdauer wird die Ausgangsspannung abgeschaltet. Dabei ist die Realisierung mit einfachen und preiswerten Bauelementen wie Widerstände und Dioden besonders vorteilhaft.

Weiterhin ergibt sich eine einfache Ansteuermöglichkeit für den Sensor durch die Halbleiterbrückenschaltung, wodurch der Spannungshub für den Ultraschallsensor im Brückenzweig annähernd verdoppelt wird. Eine vorteilhafte Anwendung erfolgt im Kraftfahrzeug zur Abstandsbestimmung beim Einparken.

### Zeichnung

In der Zeichnung sind in den Figuren 1 und 2 zwei Ausführungsbeispiele der Erfindung dargestellt. Figur 3 zeigt ein Blockschaltbild der Anordnung und die Figuren 4 und 5 zeigen Diagramme mit Abklingkurven, Figur 6 zeigt eine Brückenschaltung und Figur 7 zeigt ein weiteres Blockschaltbild.

### Beschreibung der Ausführungsbeispiele

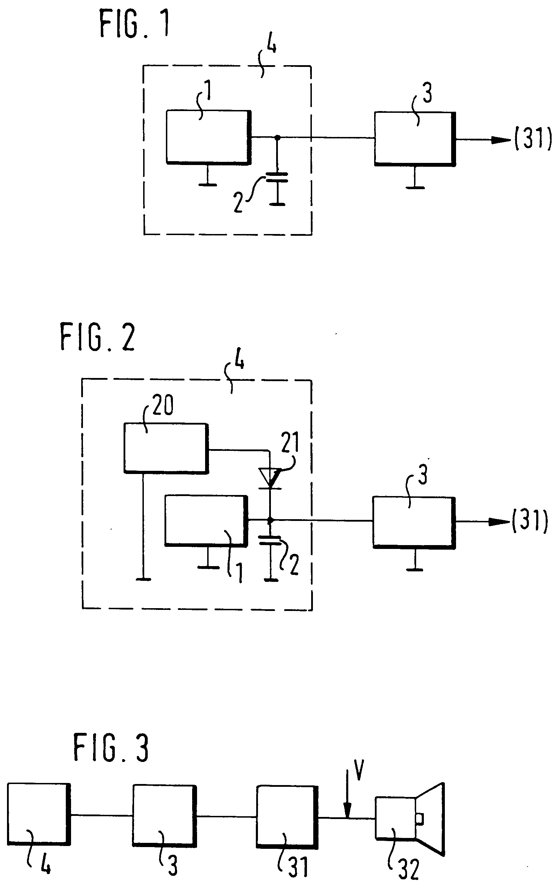

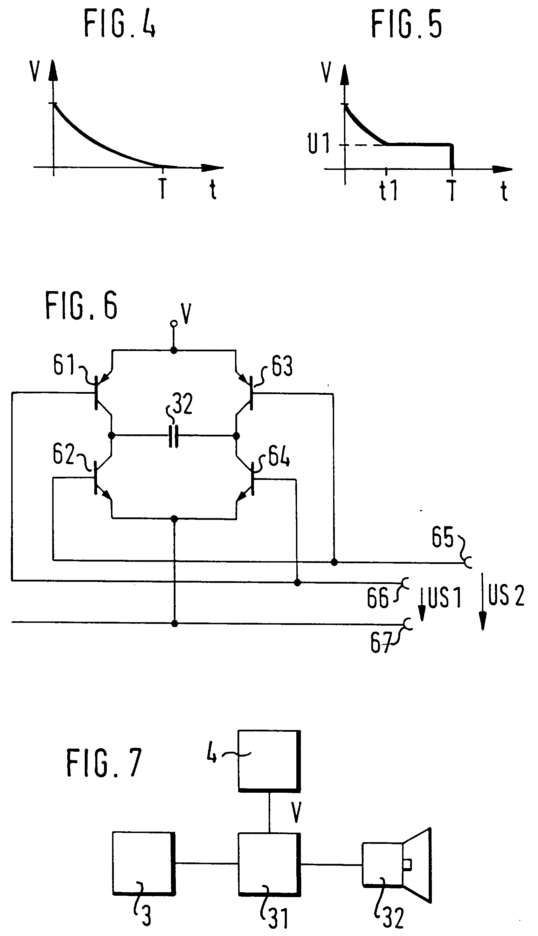

Figur 1 zeigt einen Generator 4, der mit einer Ansteuerung 3 für einen nicht dargestellten Ultraschallsensor (US-Sensor) verbunden ist. Der Generator 4 weist eine hochohmige Quelle 1 auf, die über einen parallelgeschalteten Kondensator 2 mit einem Steuereingang der Ansteuerung 3 verbunden ist. Die hochohmige Quelle 1 weist eine Spannungsquelle mit einem hochohmigen Innenwiderstand auf, deren Ausgangsspannung durch Aufladen und Entladen des Kondensators 2 steuerbar ist. Der Ausgang der Ansteuerung 3 ist mit dem Eingang der Treiberstufe 31 verbunden. Auf diese Weise kann entsprechend dem Diagramm der Figur 4 eine Steuerkurve (Hüllkurve V) für das Abklingverhalten des US-Sensors 32 vorgegeben werden (Figur 3). Die Ansteuerung 3 ist per se beispielsweise aus der Veröffentlichtung 'Ultraschall-Ortungssystem für Flurförderfahrzeuge', Prof. Wellhausen, Elektronik 9/27.4.1990, Seite 100 bis 105 bekannt.

Figur 2 zeigt ein weiteres Ausführungsbeispiel, bei dem der Generator 4 neben der hochohmigen Quelle 1 eine niederohmige Quelle 20 aufweist. Die Anordnung entspricht derjenigen der Figur 1, wobei die niederohmige Quelle 20 über eine Diode 21 dem Ausgang der hochohmigen Quelle 1 parallelgeschaltet ist. Der Ausgang ist mit der Ansteuerung 3 verbunden und deren Ausgang mit der Treiberstufe 31.

Figur 3 zeigt ein prinzipielles Blockschaltbild, wobei der Generator 4, die Ansteuerung 3, die Treiberstufe 31 und der US-Sensor 32 in Reihe geschaltet sind. Dabei wird der US-Sensor 32 von der Steuerspannung mit der Hüllkurve V der Treiberstufe 31 versorgt. Die Treiberstufe 31 enthält Leistungsschalter, die den Steuerstrom bzw. die Steuerspannung im Takt der Ansteuerung 3 liefern.

Alternativ kann zur Erhöhung der Ansteuerspannung des US-Sensors 32 gemäß Figur 6 eine Halbleiterbrückenschaltung vorgesehen werden, in deren Zweige die Transistoren 61, 62, 63, 64 angeordnet sind. Im Brückenzweig ist der US-Sensor 32 angeordnet, während die Versorgung der Brücke entsprechend Figur 7 vom Generator 4 mit der Spannung V erfolgt. Die Transistoren 61, 62, 63, 64 werden im Betriebsfall gegenphasig mit den Spannungen U_{S1} und U_{S2} angesteuert.

Die Funktionsweise dieser Schaltungsanordnung wird anhand der Figuren 4 und 5 näher erläutert. Die prinzipielle Idee, die Abklingkurve des US-Sensors 32 mittels elektronischer Schaltelemente zu beeinflussen, wird in besonders einfacher und vorteilhafter Weise entsprechend dem Blockschaltbild der Figur 1 realisiert. Durch den Kondensator 2 ergibt sich als Hüllkurve für die Spannungsamplitude der Sendeimpulse die nach Figur 4 dargestellte Kurve, wobei die Hüllkurve innerhalb der Zeit T vom Maximalwert V etwa gegen den Wert Null abfällt. Dabei ist die Abklingdauer entsprechend der dargestellten Exponentialfunktion abhängig von der Kapazität des Kondensators 2 und dem Innenwiderstand der Ansteuerung mit Treiberstufe 3. Durch Variation der Werte kann nahezu jede gewünschte Abklingkurve erreicht werden.

Mit der Schaltungsanordnung gemäß der Figur 2 wird die Abklingkurve (Hüllkurve) der Figur 5 erreicht. Im ersten Teil der Abklingdauer fällt die Hüllkurve zum Zeitpunkt t1 auf den Spannungswert U1 ähnlich ab wie im Diagramm der Figur 4. Durch die niederohmige Quelle 20 wird über die Diode 21 eine Spannung in den Kondensator C2 eingespeist, so daß die Hüllkurve in der Zeitphase t1 bis T etwa konstant ist. Die Amplitude innerhalb dieser Zeitspanne ist dabei wesentlich niedriger als der Maximalwert der Amplitude. Dadurch wird vorteilhaft bewirkt, daß wegen der verringerten Ausgangsleistung die abgestrahlten Nebenspektren nicht zu unerwünschten Geräuschen führen. Der Haltepegel U1 wird so niedrig gehalten, daß der US-Sensor 32 während der Impulsdauer T weiterhin konstant angeregt wird. Nach Ablauf der Impulsdauer T beginnt eine Totphase mit anschließender Meßphase.

Eine bevorzugte Anwendung der erfindungsgemäßen Schaltungsanordnung ist eine Ultraschall-Entfernungsmessung, wie sie beispielsweise als Einparkhilfe für Kraftfahrzeuge verwendet wird. Die Ultraschall-Entfernungsmessung ist per se aus der EP-0 152 895 B1 bekannt. Aber auch aus der EP 0 320 695 A1 ist eine berührungslose Abstandsmessung bekannt. Der als Ultraschall-Sensor ausgebildete elektroakustische Wandler ist schon aus der DE 34 41 684 A1 bekannt.

## Patentansprüche

1. Schaltungsanordnung zur Dämpfung eines Ultraschallwandlers, der zum Betrieb sowohl als Sender als auch als Empfänger ausgebildet ist, wobei die Schaltungsanordnung einen Generator (4) aufweist und wobei der Generator (4) ausgebildet ist, die Ansteuerspannung (V) für den Ultraschallwandler (32) derart zu steuern, daß die der Ansteuerspannung entsprechende Amplitude des abgestrahlten Ultraschallwandlersignals nach einer vorgegebenen Hüllkurve für die Abklingdauer (V) abklingt, dadurch gekennzeichnet, daß der Generator (4) ein weiteres Mittel (20, 21) aufweist, durch das die vorgegebene Hüllkurve (V) innerhalb einer Zeitdauer t1 zunächst auf einen von Null verschiedenen Spannungswert U1 abfallt und daß anschließend der Spannungswert U1 der Hüllkurve (V) für eine bestimmte Zeitdauer T-t1 nahezu konstant ist.

2. Schaltungsanordnung nach Anspruch 1, dadurch gekennzeichnet, daß der Generator (4) ein Mittel (2) aufweist, durch das die vorgegebene Hüllkurve (V) der Ansteuerspannung nach der Zeitdauer T etwa gegen den Wert Null abfällt.

3. Schaltungsanordnung nach Anspruch 2, dadurch gekennzeichnet, daß das Mittel (2) ein als Tiefpaß geschaltetes RC-Glied (1, 2) aufweist.

4. Schaltungsanordnung nach Anspruch 1, dadurch gekennzeichnet, daß das weitere Mittel (20, 21) eine der Ansteuerung (3) vorgeschaltete niederohmige Quelle (20) mit einer in Reihe geschalteten Diode (21) aufweist.

5. Schaltungsanordnung nach einem der vorhergehenden Ansprüche, dadurch gekennzeichnet, daß der Ultraschall-Sensor 32 im Querzweig einer Transistorbrückenschaltung (61, 62, 63, 64) angeordnet ist, daß die Transistoren (61, 62, 63, 64) im Betriebsfall über ihre Eingänge (U_{S1}, U_{S2}) gegenphasig ansteuerbar sind und daß zur Versorgung die Brücke mit dem Generator (4) verbunden ist.

6. Schaltungsanordnung nach einem der vorhergehenden Ansprüche, dadurch gekennzeichnet, daß die Schaltungsanordnung zur Anstandsmessung an einem Kraftfahrzeug verwendbar ist.

7. Schaltungsanordnung nach Anspruch 6, dadurch gekennzeichnet, daß die Schaltungsanordnung für eine Einparkhilfe verwendbar ist.

## Claims

1. Circuit arrangement for attenuating an ultrasonic transducer which is designed for operating both as a transmitter and as a receiver, the circuit arrangement having a generator (4) and the generator (4) being designed to control the drive voltage (V) for the ultrasonic transducer (32) in such a way that the amplitude, corresponding to the drive voltage, of the emitted ultrasonic transducer signal decays in accordance with a prescribed envelope for the decay period (V), characterized in that the generator (4) has a further means (20, 21) by means of which the prescribed envelope (V) initially drops within a period t1 to a voltage value U1 other than zero, and in that subsequently the voltage value U1 of the envelope (V) is virtually constant for a specific period T-t1.

2. Circuit arrangement according to Claim 1, characterized in that the generator (4) has a means (2) by means of which the prescribed envelope (V) of the drive voltage drops approximately to the value of zero after the period T.

3. Circuit arrangement according to Claim 2, characterized in that the means (2) has an RC element (1, 2) connected as a low-pass filter.

4. Circuit arrangement according to Claim 1, characterized in that the further means (20, 21) has a low-resistance scurce (20) which is connected upstream of the drive circuit (3) and has a diode (21) connected in series.

5. Circuit arrangement according to one of the preceding claims, characterized in that the ultrasonic sensor (32) is arranged in the shunt arm of a transistor bridge circuit (61, 62, 63, 64), in that the transistors (61, 62, 63, 64) can be driven in antiphase via their inputs (U_{S1}, U_{S2}) in the operational case, and in that the bridge is connected to the generator (4) for the purpose of supply.

6. Circuit arrangement according to one of the preceding claims, characterized in that the circuit arrangement can be used for distance measurement on a motor vehicle.

7. Circuit arrangement according to Claim 6, characterized in that the circuit arrangement can be used as a parking aid.

## Revendications

1. Circuit pour amortir un convertisseur ultrasons conçu pour fonctionner tant comme émetteur et comme récepteur, le circuit ayant un générateur (4) et ce générateur (4) est réalisé pour que la tension de commande (V) du convertisseur ultrasons (32) soit commandée pour que l'amplitude, correspondant à la tension de commande du signal ultrasons, émis, s'atténue suivant une courbe enveloppante prédéterminée pour la durée d'atténuation (V),
caractérisé en ce que
le générateur (4) comprend un autre moyen (20, 21) qui fait tomber la courbe-enveloppe (V), prédéterminée, à l'intérieur d'une période (t1), tout d'abord à une valeur de tension (U1) essentiellement différente de zéro et la tension (U1) de la courbe-enveloppe (V) pour une certaine durée (T-t1) est alors pratiquement constante.

2. Montage selon la revendication 1,
caractérisé en ce que
le générateur (4) comprend un moyen (2) qui fait chuter la courbe-enveloppe prédéterminée (V) par la tension de commande après une durée pour faire descendre sensiblement jusqu'à zéro.

3. Circuit selon la revendication 2,
caractérisé en ce que
le moyen (2) est un élément RC (1, 2) en forme de filtre passe-bas.

4. Circuit selon la revendication 1,
caractérisé en ce qu'
il comprend en outre un autre moyen (20, 21) avec une source faiblement ohmique (20) précédée par un circuit de commande (3), et ayant une diode (21) branchée en série.

5. Circuit selon l'une des revendications précédentes,
caractérisé en ce que
le convertisseur ultrasons (32) se trouve dans la branche transversale d'un circuit en pont à transistors (61, 62, 63, 64), les transistors (61, 62, 63, 64) étant commandés en opposition de phase par leurs entrées (U_{S1}, U_{S2}), en cas de fonctionnement et pour l'alimentation des ponts, il y a une liaison avec le générateur (4).

6. Circuit selon l'une des revendications précédentes,
caractérisé en ce que
le montage en pont est applicable pour mesurer la distance par rapport à un véhicule.

7. Circuit selon la revendication 6,
caractérisé en ce que
le circuit de commutation est applicable à une assistance aux manoeuvres de garage.
